# EUROPÄISCHE PATENTSCHRIFT

(11) **EP 2 416 129 B1**
(45) Veröffentlichungstag und Bekanntmachung des Hinweises auf die Patenterteilung: **12.03.2014**
(21) Anmeldenummer: 11006295.7
(22) Anmeldetag: 29.07.2011
(51) Int. Cl.: G01G 15/00, G01G 15/02, G01G 13/04

(54) **Vorrichtung und Verfahren zum Handhaben von Portionen aus Produkten**
Device and method for handling portions of products
Dispositif et procédé de manipulation de portions de produits

(30) Priorität: 05.08.2010 DE 102010033526
(43) Veröffentlichungstag der Anmeldung: 08.02.2012
(73) Patentinhaber: Weber Maschinenbau GmbH Breidenbach, 35236 Breidenbach (DE)
(72) Erfinder:
(74) Vertreter: Manitz, Finsterwald & Partner GbR

(56) Entgegenhaltungen:
- EP-A1- 0 893 674
- US-A- 4 397 384
- US-A- 5 499 719

## Beschreibung

Die vorliegende Erfindung betrifft eine Vorrichtung zum Handhaben von Portionen aus Produkten, insbesondere Lebensmittelprodukten, mit einem Produktförderer, welcher die Portionen nacheinander auf wenigstens einer Hauptförderspur entlang einer Förderrichtung fördert, und wenigstens einem Sensor zum Erkennen fehlgewichtiger Portionen.

Derartige Vorrichtungen werden beispielsweise in der Lebensmittelindustrie dazu eingesetzt, um von einer Schneidvorrichtung, wie z.B. einem Hochleistungsslicer, abgetrennte Produktscheiben portionsweise einer nachgeordneten Bearbeitungsvorrichtung, beispielsweise einer Verpackungsmaschine, zuzuführen. Als Produktförderer kommen insbesondere Band- oder Riemenförderer in Betracht. Um sicherzustellen, dass nur solche Portionen weiterverarbeitet werden, welche eine vorgegebene Gewichtsspezifikation erfüllen, werden fehlgewichtige Portionen durch den Sensor erkannt und beispielsweise durch manuelle Korrektur auf ein gefordertes Sollgewicht gebracht. Hierfür braucht ein entsprechender Bediener jedoch eine gewisse Zeit, weshalb durch eine derartige Korrektur letztlich die Wirtschaftlichkeit der Produktionsanlage eingeschränkt wird. Darüber hinaus kann es bei einer manuellen Korrektur in Folge einer Abwesenheit oder Unachtsamkeit des Bedieners dazu kommen, dass fehlgewichtige Portionen weitergefördert und schließlich verpackt werden. Ein derartiges Weiterverarbeiten fehlgewichtiger Portionen ist bei der Lebensmittelproduktion jedoch unbedingt zu vermeiden.

Eine Vorrichtung zum Handhaben von Portionen aus Produkten kann eine Korrekturspur mit einem ersten Förderabschnitt umfassen, welcher dazu dient, fehlgewichtige Portionen von der Hauptförderspur abzuzweigen und zu einer Gewichtskorrekturstation zu fördern.

Die US 5 499 719 A offenbart eine Fördereinrichtung für Portionen aus Lebensmittelscheiben, welche einen Hauptförderer zum Transportieren korrektgewichtiger Portionen von einem Slicer zu einer Verpackungsmaschine und einen oberhalb des Hauptförderers angeordneten Abweisförderer umfasst. Fehlgewichtige Portionen gelangen mittels Wippen auf den Abweisförderer. Ein Bediener ergänzt untergewichtige Portionen und legt sie dann zurück auf den Hauptförderer.

Es ist eine Aufgabe der Erfindung, eine Möglichkeit zu schaffen, mit welcher fehlgewichtige Portionen einfach und zuverlässig korrigiert werden können.

Die Lösung dieser Aufgabe erfolgt durch eine Vorrichtung mit den Merkmalen des Anspruchs 1.

Erfindungsgemäß umfasst die Korrekturspur einen zweiten Förderabschnitt, welcher dazu dient, gewichtskorrigierte Portionen wieder der Hauptförderspur zuzuführen, wobei der erste Förderabschnitt und der zweite Förderabschnitt im Bereich der Gewichtskorrekturstation durch eine Unterbrechung der Korrekturspur voneinander getrennt sind, welche einen Übertritt fehlgewichtiger Portionen von dem ersten Förderabschnitt auf den zweiten Förderabschnitt verhindert.

Als fehlgewichtig erkannte Portionen werden also von der Hauptförderspur abgezweigt und auf eine separate Korrekturspur geleitet. Dies kann mittels eines steuerbaren Weichenelements erfolgen, wie es auf dem Fachgebiet bekannt ist. Auf der Korrekturspur werden die fehlgewichtigen Portionen dann der Gewichtskorrekturstation zugeführt, an welcher der erste Förderabschnitt der Korrekturspur endet. Aufgrund der Unterbrechung der Korrekturspur werden die fehlgewichtigen Portionen von der Gewichtskorrekturstation nicht wieder abtransportiert, sofern sie nicht zuvor korrigiert und aktiv zu dem zweiten Förderabschnitt verbracht wurden. Im einfachsten Fall kann sich zwischen dem ersten Förderabschnitt und dem zweiten Förderabschnitt der Korrekturspur eine Lücke befinden, die ausreichend groß ist, sodass eine ankommende fehlgewichtige Portion in der Lücke verbleibt und nicht auf den zweiten Förderabschnitt gelangt. Das Gewicht der fehlgewichtigen Portion kann nun im Bereich der Gewichtskorrekturstation korrigiert werden, indem z.B. einzelne Produkte zu der Portion hinzugefügt oder von der Portion weggenommen werden. Dies kann je nach Anwendung automatisch, z.B. mittels eines Roboters, oder manuell durch einen Bediener erfolgen. Nach der Korrektur kann die Portion, welche nun ein korrektes Gewicht aufweist, durch den Roboter oder den Bediener dem zweiten Förderabschnitt zugeführt werden, welcher die gewichtskorrigierte Portion wieder der Hauptförderspur zuführt und in den regulären Produktportionsstrom einschleust. Auch das Einschleusen kann mittels eines steuerbaren Weichenelements erfolgen.

Durch das Ausleiten aller fehlgewichtigen Portionen aus dem durchgehenden Produktportionsstrom auf eine separate Korrekturspur bleibt einem Bediener ausreichend Zeit, um die Korrektur vorzunehmen. D.h. der Durchsatz an Portionen auf der Hauptförderspur wird durch die Korrektur nicht beeinträchtigt. Das Einschleusen der gewichtskorrigierten Portionen kann nämlich zu einem beliebigen späteren Zeitpunkt erfolgen. Hierbei ist insbesondere zu beachten, dass bei modernen Hochleistungsslicern nur relativ selten fehlgewichtige Portionen vorkommen. Dadurch dass der Fördervorgang auf der Korrekturspur an der Unterbrechung zwangsweise unterbrochen wird, ist ein versehentliches Wiedereinschleusen fehlgewichtiger Portionen in die Hauptförderspur ausgeschlossen. Mit anderen Worten ist eine vorübergehende Unaufmerksamkeit oder Abwesenheit eines Bedieners bzw. eine Fehlfunktion eines Korrekturroboters unkritisch, da in diesem Fall lediglich die fehlgewichtige Portion länger im Bereich der Gewichtskorrekturstation bleibt, aber nicht fälschlicherweise dem Produktionsprozess zugeführt wird. Durch die erfindungsgemäße Vorrichtung wird somit ein unerwünschtes Verpacken fehlgewichtiger Portionen sicher vermieden, wobei jedoch die Effizienz der Gesamtanlage nicht beeinträchtigt wird.

Erfindungsgemäß ist in der Unterbrechung eine Puffereinrichtung zur vorübergehenden Lagerung fehlgewichtiger Portionen vorgesehen. Bei einer besonders einfachen Ausgestaltung handelt es sich bei der Puffereinrichtung um eine Produktablage, welche in einer Lücke zwischen dem ersten Förderabschnitt und dem zweiten Förderabschnitt der Korrekturspur angeordnet ist. Ankommende fehlgewichtige Portionen bleiben auf dieser Ablage liegen, bis ein Bediener oder ein Roboter sie aufnimmt und - nach einer Gewichtskorrektur - dem zweiten Förderabschnitt zuführt. Es sind jedoch auch komplexere Puffereinrichtungen möglich, welche z.B. verschiebbare Ablagen oder Regalsysteme einsetzen, um eine Vielzahl von fehlgewichtigen Portionen aufzunehmen und geordnet zwischenzulagern.

Die Puffereinrichtung umfasst erfindungsgemäß einen Pufferförderer, welcher dazu dient, fehlgewichtige Portionen von dem ersten Förderabschnitt weg zu transportieren. Auf diese Weise wird ein Portionsstau am Ende des ersten Förderabschnitts der Korrekturspur vermieden. Vorzugsweise fördert der Pufferförderer die Portionen quer zu der Korrekturspur. In dieser Richtung ist im Allgemeinen ausreichend Platz für die Förderung und/oder Lagerung mehrerer fehlgewichtiger Portionen vorhanden. Am Ende des Pufferförderers kann sich eine zusätzliche Puffervorrichtung befinden, wie z.B. ein Behälter oder eine Zusatzablage, durch welche selbst im Extremfall einer längeren Abwesenheit des Bedieners ein Portionsstau vermieden wird. Grundsätzlich ist es auch möglich, dass der Pufferförderer die Portionen in Richtung der Korrekturspur fördert, sofern durch den Pufferförderer selbst eine ausreichende Puflerfläche bereitgestellt wird.

Weiterbildungen der Erfindung sind in den abhängigen Ansprüchen, der Beschreibung sowie der beigefügten Zeichnung angegeben.

Gemäß einer weiteren Ausführungsform ist im Bereich der Gewichtskorrekturstation eine Ablage für wenigstens eine fehlgewichtige Portion vorgesehen, welche als Reservoir einzelner Produkte für die Gewichtskorrektur nachfolgender fehlgewichtiger Portionen dient. Beim Korrigieren der fehlgewichtigen Portionen kann also z.B. so vorgegangen werden, dass die erste ankommende Portion auf die Ablage gelegt und dort als "Produktspender" bereitgehalten wird. Eine nachfolgende untergewichtige Portion kann nun korrigiert werden, indem von der auf der Ablage befindlichen ersten Portion einzelne Produkte entnommen und der nachfolgenden untergewichtigen Portion hinzugefügt werden. Es wird also eine fehlgewichtige Portion nach und nach aufgelöst, um mehrere nachfolgende fehlgewichtige Portionen zu korrigieren. Sobald auf der Ablage keine einzelnen Produkte zum Auffüllen anderer Portionen mehr vorhanden sind, wird die nächste ankommende fehlgewichtige Portion als neues Reservoir auf die Ablage gelegt. Der Vorteil dieser Vorgehensweise besteht darin, dass an der Gewichtskorrekturstation kein separates Produktreservoir oder eine Produktzufuhr vorgesehen sein muss. Ein weiterer Vorteil besteht darin, dass nach dem "First-In-First-Out"-Prinzip gearbeitet werden kann. Das heißt also ein unnötig langes Lagern einzelner Produkte im Bereich der Gewichtskorrekturstation wird vermieden, was insbesondere aus Kühlungs- und Hygienegesichtspunkten von Vorteil ist.

Gemäß einer Ausgestaltung der Erfindung bildet der Pufferförderer selbst oder ein Abschnitt desselben die Ablage. Insbesondere kann der Pufferförderer derart ausgebildet sein, dass er nicht kontinuierlich, sondern lediglich schrittweise bei Bedarf fördert, z.B. lediglich bei einer neu an der Gewichtskorrekturstation ankommenden fehlgewichtigen Portion. Der Bediener entnimmt dann beispielsweise jeweils von derjenigen Portion, welche bereits am weitesten von dem ersten Förderabschnitt weg gefördert wurde, einzelne Produkte und fügt sie einer weiteren auf dem Pufferförderer befindlichen Portion hinzu. In diesem Fall muss keine separate Ablage für eine als Reservoir dienende Portion vorgesehen sein.

Gemäß einer weiteren Ausführungsform ist im Bereich der Gewichtskorrekturstation wenigstens eine Waage zum Ermitteln des Gewichts von fehlgewichtigen und/oder gewichtskorrigierten Portionen vorgesehen. Ein Bediener kann somit einer fehlgewichtigen Portion solange einzelne Produkte entnehmen oder dieser hinzufügen, bis das Gewicht der Portion innerhalb eines vorgegebenen Sollbereichs liegt.

Um dem Bediener die Arbeit zu erleichtern, kann die Waage ein "IO"-Signal anzeigen, wenn das Gewicht der gewogenen Portion innerhalb eines Sollbereichs liegt, oder ein "+n"-Signal anzeigen, wenn zum Erreichen des Sollbereichs das Hinzufügen von n einzelnen Produkten zu der Portion erforderlich ist, oder ein "-n"-Signal anzeigen, wenn zum Erreichen des Sollbereichs das Entfernen von n einzelnen Produkten von der Portion erforderlich ist. Mit n wird eine beliebige natürliche Zahl bezeichnet. Sofern das Hinzufügen von einem einzelnen Produkt zu der Portion ausreicht, um das Gewicht der Portion auf einen Wert innerhalb des Sollbereichs zu bringen, wird also z.B. "+1" angezeigt. Der Bediener weiß somit beim Wiegen einer Portion sogleich, wie viele einzelne Produkte der gewogenen Portion zu entnehmen oder hinzuzufügen sind. Zusätzlich kann die Waage auch das momentane Gewicht der gewogenen Portion und/oder einen Fehlbetrag zwischen Sollgewicht und tatsächlichem Gewicht anzeigen.

Die Waage kann grundsätzlich als separate Vorrichtung neben der Korrekturspur angeordnet sein. Gemäß einer bevorzugten Ausführungsform der Erfindung ist die Waage jedoch in den zweiten Förderabschnitt integriert. Die Waage kann dabei ein Freigabesignal ausgeben, wenn das Gewicht einer gewichtskorrigierten Portion in einem Sollbereich liegt, wobei das Freigabesignal den zweiten Förderabschnitt automatisch in Betrieb setzt. Auf diese Weise ist sichergestellt, dass ein Abtransport einer Portion auf dem zweiten Förderabschnitt nur dann erfolgen kann, wenn das Gewicht der Portion innerhalb des vorgegebenen Sollbereichs liegt. Da die Waage selbst den zweiten Förderabschnitt in Bewegung setzt, wird die Arbeit des Bedieners weiter erleichtert.

Gemäß einer weiteren Ausgestaltung der Erfindung ist die Korrekturspur im Bereich eines Pufferabschnitts der Hauptförderspur angeordnet. Dies ist insofern vorteilhaft, als bei einer derartigen Anordnung derjenige Zeitpunkt zum Wiedereinschleusen gewichtskorrigierter Portionen in den Produktportionsstrom genutzt werden kann, zu dem der Pufferabschnitt zwischen zwei Pufferbereichen, z.B. von einer Pufferebene auf eine andere Pufferebene, wechselt. Der Produktfördervorgang auf der Hauptförderspur wird somit durch das Einschleusen der gewichtskorrigierten Portionen nicht beeinträchtigt.

Eine Erfassungsvorrichtung kann der Korrekturspur in Förderrichtung nachgeschaltet an dem Produktförderer angeordnet sein, um die Lage der geförderten Portionen, insbesondere der gewichtskorrigierten Portionen, auf der Hauptförderspur zu erfassen. Bei der Erfassungsvorrichtung kann es sich um einen optischen Sensor, insbesondere ein Kamerasystem, handeln. Sollten einzelne gewichtskorrigierte Portionen nicht exakt positioniert sein, wird dies von der Erfassungsvorrichtung detektiert und z.B. an eine übergeordnete Steuereinrichtung gemeldet. Die Lage der fehlpositionierten Portion kann dann bei der weitergehenden Handhabung berücksichtigt werden oder es kann eigens eine Handhabungsvorrichtung wie ein Roboter vorgesehen sein, um die Lage automatisch zu korrigieren.

Die Erfindung betrifft auch ein Verfahren zum Handhaben von Portionen aus Produkten, insbesondere Lebensmittelprodukten, wobei die Portionen nacheinander auf wenigstens einer Hauptförderspur entlang einer Förderrichtung gefördert werden und fehlgewichtige Portionen mittels eines Sensors erkannt werden.

Erfindungsgemäß werden fehlgewichtige Portionen mittels eines ersten Förderabschnitts einer Korrekturspur von der Hauptförderspur abgezweigt und zu einer Gewichtskorrekturstation gefördert. Gewichtskorrigierte Portionen werden auf einem zweiten Förderabschnitt der Korrekturspur wieder der Hauptförderspur zugeführt, wobei ein Übertritt fehlgewichtiger Portionen von dem ersten Förderabschnitt auf den zweiten Förderabschnitt verhindert wird.

Die fehlgewichtigen Portionen werden hierbei in einer in der Unterbrechung vorgesehenen Puffereinrichtung vorübergehend gelagert und mittels eines Pufferförderers der Puffereinrichtung von dem ersten Förderabschnitt weg transportiert.

Vorzugsweise wird zur Gewichtskorrektur wenigstens ein einzelnes Produkt von der fehlgewichtigen Portion entnommen oder der fehlgewichtigen Portion hinzugefügt. Das Entnehmen und/oder das Hinzufügen einzelner Produkte kann je nach Anwendung manuell oder automatisch erfolgen.

Gemäß einer Ausführungsform wird eine erste fehlgewichtige Portion als Reservoir für einzelne Produkte zur Gewichtskorrektur nachfolgender fehlgewichtiger Portionen verwendet.

Die Erfindung wird im Folgenden beispielhaft unter Bezugnahme auf die Zeichnung beschrieben.
- Fig. 1: zeigt eine vereinfachte Seitenansicht einer erfindungsgemäßen Vorrichtung zur Handhabung von Portionen aus Produkten.
- Fig. 2: zeigt eine Draufsicht auf eine Gewichtskorrekturstation einer Vorrichtung zur Handhabung von Portionen aus Produkten gemäß einer zu der Vorrichtung gemäß Fig. 1 alternativen Ausgestaltung.

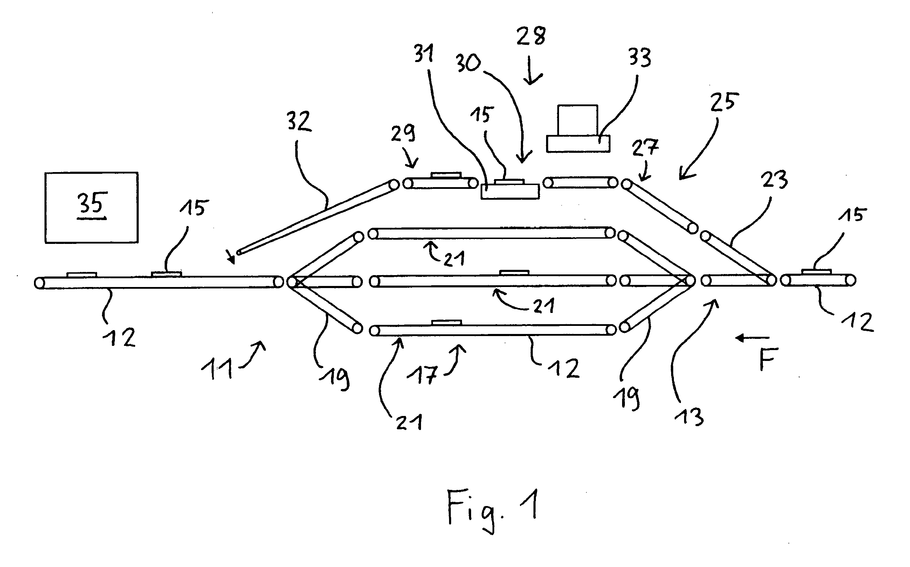

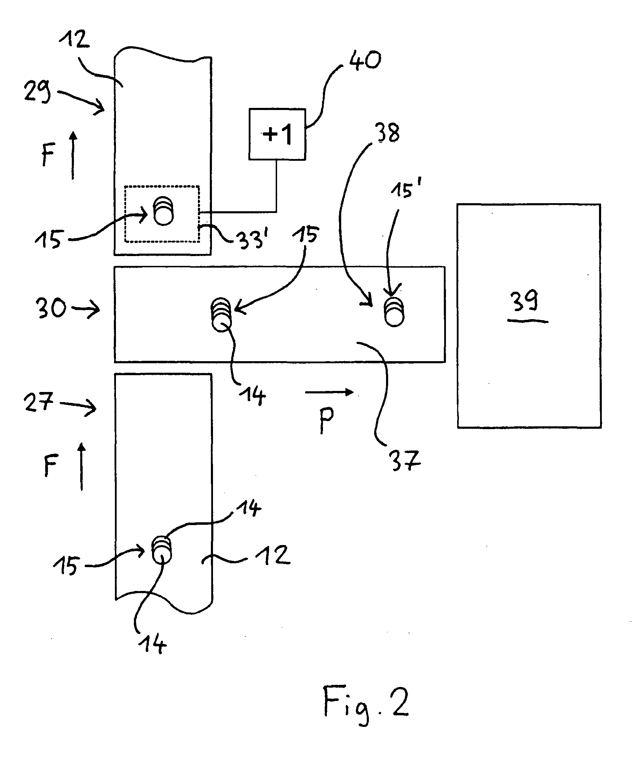

In Fig. 1 ist eine erfindungsgemäße Vorrichtung zur Handhabung von Portionen 15 aus Lebensmittelprodukten, wie beispielsweise Fleisch-, Wurst- oder Käsescheiben, dargestellt. Ein nicht gezeigter Slicer trennt von einem Produktlaib mit hoher Geschwindigkeit einzelne Produktscheiben 14 (Fig. 2) ab, welche auf einen Produktförderer 11 fallen und von diesem entlang einer Förderrichtung F gefördert werden. Der Produktförderer 11 ist im dargestellten Ausführungsbeispiel aus mehreren einzelnen Bandförderern 12 zusammengesetzt, welche gemeinsam eine Hauptförderspur 13 bilden. Eine nicht dargestellte Steuereinrichtung des Slicers und/oder des Produktförderers 11 sorgt dafür, dass jeweils mehrere abgeschnittene Produktscheiben 14 eine Portion 15 bilden.

Die Hauptförderspur 13 weist einen Pufferabschnitt 17 auf, in welchem mittels einer steuerbaren Mehrspurwippe 19 ankommende Portionen 15 jeweils einer von drei parallelen Pufferspuren 21 zugeführt werden. Am Ende des Pufferabschnitts 17 werden mittels einer weiteren Mehrspurwippe 19 die drei Pufferspuren 21 wieder zu einer einzelnen Spur vereinigt. Der Pufferabschnitt 17 kann insbesondere dazu dienen, den Portionsdurchsatz des Produktförderers 11 bedarfsweise zu variieren.

Die auf dem Produktförderer 11 geförderten Portionen 15 werden mittels eines nicht dargestellten Sensors vor dem Eintritt in den Pufferabschnitt 17 hinsichtlich ihres Gewichts überprüft, d.h. es wird ermittelt, ob das Portionsgewicht innerhalb eines vorgegebenen Sollbereichs liegt. Sofern eine fehlgewichtige Portion 15 erkannt wird, wird diese mittels einer weiteren steuerbaren Mehrspurwippe 23 von der Hauptförderspur 13 abgezweigt und einer Korrekturspur 25 zugeführt. Die Korrekturspur 25 ist ebenfalls aus mehreren einzelnen Bandförderern 12 zusammengesetzt und umfasst einen ersten Förderabschnitt 27, welcher von der Hauptförderspur 13 bis zu einer Gewichtskorrekturstation 28 führt, sowie einen zweiten Förderabschnitt 29, welcher von der Gewichtskorrekturstation 28 zurück zu der Hauptförderspur 13 führt. Fehlgewichtige Portionen 15 werden also auf der Korrekturspur 25 aus dem normalen Verarbeitungsprozess ausgeschleust, an einer Gewichtskorrekturstation korrigiert und schließlich wieder in den Verarbeitungsprozess eingeschleust.

Wie aus Fig. 1 hervorgeht, sind der erste Förderabschnitt 27 und der zweite Förderabschnitt 29 der Korrekturspur 25 durch eine Lücke oder Unterbrechung 30 voneinander getrennt. In der Unterbrechung 30 befindet sich eine Puffereinrichtung 31, welche im dargestellten Ausführungsbeispiel als einfache Produktablage ausgeführt ist. Eine auf dem ersten Förderabschnitt 27 an der Gewichtskorrekturstation 28 ankommende Portion 15 gelangt auf die Puffereinrichtung 31 und bleibt dort liegen, d.h. es kann kein Übertritt der Portion 15 von dem ersten Förderabschnitt 27 auf den zweiten Förderabschnitt 29 stattfinden. Ein Bediener an der Gewichtskorrekturstation 28 muss die Portion 15 manuell korrigieren und sie dann auf einen entsprechenden Bandförderer 12 des zweiten Förderabschnitts 29 legen, damit sie weiter gefördert und wieder der Hauptförderspur 13 zugeführt werden kann. Das Einschleusen in die Hauptförderspur 13 erfolgt mittels einer schwenkbaren Wippe 32. Für den Einschleusungsvorgang kann in vorteilhafter Weise derjenige Zeitpunkt genutzt werden, zu welchem in dem Pufferabschnitt 17 von einer der Pufferspuren 21 auf eine andere Pufferspur 21 umgeschaltet wird. Grundsätzlich kann das Wiedereinschleusen gewichtskorrigierter Portionen 15 nach einer einstellbaren Zeit, nach einer einstellbaren Anzahl korrigierter Portionen 15 oder auf Anforderung durch den Bediener erfolgen.

Eine Waage 33 ist im Bereich der Gewichtskorrekturstation 28 vorgesehen, um dem Bediener ein Ermitteln des Gewichts von fehlgewichtigen und/oder gewichtskorrigierten Portionen 15 zu ermöglichen. Der Bediener kann das Gewicht einer fehlgewichtigen Portion 15 korrigieren, indem er einzelne Produktscheiben 14 der Portion 15 hinzufügt oder von der Portion 15 entfernt. Nach der Gewichtskorrektur wird die korrigierte Portion 15 wie vorstehend beschrieben auf dem zweiten Förderabschnitt 29 der Korrekturspur 25 wieder zurück zu der Hauptförderspur 13 gefördert und mittels der Wippe 32 in diese eingeschleust.

Der Korrekturspur 25 in Förderrichtung F nachgeschaltet ist eine Erfassungsvorrichtung 35 an dem Produktförderer 11 angeordnet, um die Lage der gewichtskorrigierten Portionen 15 auf der Hauptförderspur 13 zu erfassen. Die erfasste Lage kann dazu herangezogen werden, eine nicht dargestellte weitere Handhabungsvorrichtung im Sinne einer automatischen Lagekorrektur der Portionen 15 anzusteuern. Alternativ kann einer Handhabungsvorrichtung, welche beispielsweise die Portionen 15 in eine Verpackungsmaschine umsetzt, die erfasste Lage mitgeteilt werden, um so ein sicheres Umsetzen zu gewährleisten.

Die Puffereinrichtung31, welche der vorübergehenden Lagerung fehlgewichteter Portionen 15 dient, kann in vielfältiger Weise ausgestaltet sein. Fig. 2 zeigt ein Ausführungsbeispiel, bei welchem die Puffereinrichtung 31 einen Pufferförderer 37 umfasst, welcher dazu dient, fehlgewichtige Portionen in einer quer zu der Förderrichtung F der Korrekturspur 25 weisenden Pufferrichtung P von dem ersten Förderabschnitt 27 weg zu transportieren. Am Ende des Pufferförderers 37 ist ein Behälter 39 angeordnet, welcher eine zusätzliche Puffervorrichtung bildet und sicherheitshalber vorgesehen ist, um etwaige über das Ende des Pufferförderers 37 hinaus geförderte Portionen 15 aufzunehmen.

Die Waage 33' ist bei der Ausführungsform gemäß Fig. 2 in einen Bandförderer 12 des zweiten Förderabschnitts 29 integriert. Sie weist eine Anzeige 40 auf, welche in Abhängigkeit von dem Gewicht einer gewogenen Portion ein "IO"-Signal, ein "+n"-Signal oder ein "-n"-Signal anzeigt. Ein "+ 1 "-Signal zeigt einem Bediener an der Gewichtskorrekturstation 28 beispielsweise an, dass noch eine weitere einzelne Produktscheibe 14 zu der gewogenen Portion 15 hinzuzufügen ist, damit dass Portionsgewicht innerhalb eines Sollbereichs liegt. In ähnlicher Weise gibt ein "-1 "-Signal dem Bediener zu verstehen, dass eine Produktscheibe 14 von der gewogenen Portion 15 zu entfernen ist, damit das Portionsgewicht innerhalb des Sollbereichs liegt. Das "IO"-Signal gibt hingegen an, dass die gewogene Portion 15 bereits ein innerhalb des Sollbereichs liegendes Gewicht aufweist und wieder der Hauptförderspur 13 (Fig. 1) zugeführt werden kann. In dem dargestellten Ausführungsbeispiel ist die Waage 33' mit einer nicht dargestellten Steuereinrichtung des zweiten Förderabschnitts 29 verbunden und gibt gleichzeitig mit dem Anzeigen des "IO"-Signals ein Freigabesignal an die Steuereinrichtung aus, welches die Bandförderer 12 des zweiten Förderabschnitts 29 automatisch in Betrieb setzt.

Bei Ankunft einer fehlgewichtigen Portion 15 an der Gewichtskorrekturstation 28 gelangt diese zunächst von dem ersten Förderabschnitt 27 auf den Pufferförderer 37. Dieser wird so betrieben, dass bei jeder neu ankommenden fehlgewichtigen Portion 15 jeweils ein begrenztes Weiterfördern um einen vorgegebenen Betrag erfolgt. Die fehlgewichtigen Portionen 15 werden also aufeinander folgend auf dem Pufferförderer 37 zwischengelagert, wobei sich die zuerst angekommene Portion 15' an der im Bild am weitesten rechts liegenden Position befindet. Diese zuerst angekommene Portion 15' wird von dem Bediener als Reservoir für einzelne Produktscheiben 14 verwendet und verbleibt auf dem Pufferförderer 37, welcher somit eine Ablage 38 für die zuerst angekommene Portion 15' bildet. Die nächste folgende fehlgewichtige Portion 15 wird vom Bediener auf die in den zweiten Förderabschnitt 29 integrierte Waage 33' gelegt, welche in Abhängigkeit von dem ermittelten Portionsgewichts ein "IO"-Signal, ein "+n"-Signal oder ein "-n"-Signal ausgibt. Sofern die Waage 33' wie dargestellt ein "+1"-Signal ausgibt, entnimmt der Bediener der zuerst angekommenen Portion 15' eine einzelne Produktscheibe 14 und legt sie auf die Portion 15, welche sich auf der Waage 33' befindet. Das Gewicht der Portion 15 liegt nun innerhalb des vorgegebenen Sollbereichs und die Waage 33' gibt daher ein "IO"-Signal aus. Gleichzeitig gibt die Waage 33' auch ein Freigabesignal an eine Steuereinrichtung der Korrekturspur 25 aus, welches die Bandförderer 12 des zweiten Förderabschnitts 29 automatisch in Betrieb setzt. Die gewichtskorrigierte Portion 15 wird dann wie im Zusammenhang mit Fig. 1 beschrieben auf dem zweiten Förderabschnitt 29 wieder zurück zu der Hauptförderspur 13 transportiert und dort in den regulären Produktstrom eingeschleust. Wenn die zuerst angekommene Portion 15', welche als Reservoir dient, aufgebraucht ist, wird die nächste ankommende fehlgewichtige Portion 15 wiederum auf dem Pufferförderer 37 belassen und als Spender für einzelne Produktscheiben 14 herangezogen. Auf diese Weise wird verhindert, dass ein separates statisches Produktscheiben-Reservoir vorgesehen werden muss, bei welchem insbesondere die Gefahr bestünde, dass die einzelnen Produktscheiben 14 unzulässig lange ungekühlt lagern.

Insgesamt ermöglicht die Erfindung eine einfache und zuverlässige Korrektur fehlgewichtiger Scheiben, wobei eine Beeinträchtigung des regulären Förderungs- und Handhabungsprozesses vermieden ist.

### Bezugszeichenliste

- 11: Produktförderer
- 12: Bandförderer
- 13: Hauptförderspur
- 14: Produktscheibe
- 15, 15': Portion
- 17: Pufferabschnitt
- 19: Mehrspurwippe
- 21: Pufferspur
- 23: Mehrspurwippe
- 25: Korrekturspur
- 27: erster Förderabschnitt
- 28: Gewichtskorrekturstation
- 29: zweiter Förderabschnitt
- 30: Unterbrechung
- 31: Puffereinrichtung
- 32: Wippe
- 33, 33': Waage
- 35: Erfassungsvorrichtung
- 37: Pufferförderer
- 38: Ablage
- 39: Behälter
- 40: Anzeige
- F: Förderrichtung
- P: Pufferrichtung

## Patentansprüche

1. Vorrichtung zum Handhaben von Portionen (15) aus Produkten (14), insbesondere Lebensmittelprodukten,
mit einem Produktförderer (11), welcher die Portionen (15) nacheinander auf wenigstens einer Hauptförderspur (13) entlang einer Förderrichtung (F) fördert,
wenigstens einem Sensor zum Erkennen fehlgewichtiger Portionen (15), und
einer Korrekturspur (25) mit einem ersten Förderabschnitt (27), welcher dazu dient, fehlgewichtige Portionen (15) von der Hauptförderspur (13) abzuzweigen und zu einer Gewichtskorrekturstation (28) zu fördern,
**gekennzeichnet durch**
einen zweiten Förderabschnitt (29) der Korrekturspur (25), welcher dazu dient, gewichtskorrigierte Portionen (15) wieder der Hauptförderspur (13) zuzuführen, wobei der erste Förderabschnitt (27) und der zweite Förderabschnitt (29) im Bereich der Gewichtskorrekturstation (28) **durch** eine Unterbrechung (30) der Korrekturspur (25) voneinander getrennt sind, welche einen Übertritt fehlgewichtiger Portionen (15) von dem ersten Förderabschnitt (27) auf den zweiten Förderabschnitt (29) verhindert, wobei
in der Unterbrechung (30) eine Puffereinrichtung (31) zur vorübergehenden Lagerung fehlgewichtiger Portionen (15) vorgesehen ist, und wobei
die Puffereinrichtung (31) einen Pufferförderer (37) umfasst, welcher dazu dient, fehlgewichtige Portionen (15) von dem ersten Förderabschnitt (27) weg zu transportieren.

2. Vorrichtung nach Anspruch 1,
**dadurch gekennzeichnet, dass**
im Bereich der Gewichtskorrekturstation (28) eine Ablage (38) für wenigstens eine fehlgewichtige Portion (15) vorgesehen ist, welche als Reservoir einzelner Produkte (14) für die Gewichtskorrektur nachfolgender fehlgewichtiger Portionen (15) dient.

3. Vorrichtung nach Anspruch 2,
**dadurch gekennzeichnet, dass**
der Pufferförderer (37) oder ein Abschnitt desselben eine Ablage (38) bildet.

4. Vorrichtung nach zumindest einem der vorstehenden Ansprüche,
**dadurch gekennzeichnet, dass**
im Bereich der Gewichtskorrekturstation (28) wenigstens eine Waage (33, 33') zum Ermitteln des Gewichts von fehlgewichtigen und/ oder gewichtskorrigierten Portionen (15) vorgesehen ist.

5. Vorrichtung nach Anspruch 4,
**dadurch gekennzeichnet, dass**
die Waage (33') ein "IO"-Signal anzeigt, wenn das Gewicht der gewogenen Portion (15) innerhalb eines Sollbereichs liegt, oder
ein "+n"-Signal anzeigt, wenn zum Erreichen des Sollbereichs das Hinzufügen von n einzelnen Produkten (14) zu der Portion (15) erforderlich ist,
oder ein "-n"-Signal anzeigt, wenn zum Erreichen des Sollbereichs das Entfernen von n einzelnen Produkten (14) von der Portion (15) erforderlich ist.

6. Vorrichtung nach Anspruch 4 oder 5,
**dadurch gekennzeichnet, dass**
die Waage (33') in den zweiten Förderabschnitt (29) integriert ist.

7. Vorrichtung nach einem der Ansprüche 4 bis 6,
**dadurch gekennzeichnet, dass**
die Waage (33') ein Freigabesignal ausgibt, wenn das Gewicht einer gewichtskorrigierten Portion (15) in einem Sollbereich liegt, wobei das Freigabesignal den zweiten Förderabschnitt (29) automatisch in Betrieb setzt.

8. Vorrichtung nach zumindest einem der vorstehenden Ansprüche,
**dadurch gekennzeichnet, dass**
die Korrekturspur (25) im Bereich eines Pufferabschnitts (17) der Hauptförderspur (13) angeordnet ist.

9. Vorrichtung nach zumindest einem der vorstehenden Ansprüche,
**dadurch gekennzeichnet, dass**
der Korrekturspur (25) in Förderrichtung (F) nachgeschaltet eine Erfassungsvorrichtung an dem Produktförderer (11) angeordnet ist, um die Lage der geförderten Portionen (15), insbesondere der gewichtskorrigierten Portionen (15), auf der Hauptförderspur (13) zu erfassen.

10. Verfahren zum Handhaben von Portionen (15) aus Produkten (14), insbesondere Lebensmittelprodukten, wobei die Portionen (15) nacheinander auf wenigstens einer Hauptförderspur (13) entlang einer Förderrichtung (F) gefördert werden und fehlgewichtige Portionen (15) mittels eines Sensors erkannt werden, wobei die erkannten fehlgewichtigen Portionen (15) mittels eines ersten Förderabschnitts (27) einer Korrekturspur (25) von der Hauptförderspur (13) abgezweigt und zu einer Gewichtskorrekturstation (28) gefördert werden,
**dadurch gekennzeichnet, dass**
gewichtskorrigierte Portionen (15) auf einem zweiten Förderabschnitt (29) der Korrekturspur (25) wieder der Hauptförderspur (13) zugeführt werden, wobei ein Übertritt fehlgewichtiger Portionen (15) von dem ersten Förderabschnitt (27) auf den zweiten Förderabschnitt (29) durch eine Unterbrechung (30) der Korrekturspur (25) verhindert wird, wobei die fehlgewichtigen Portionen (15) in einer in der Unterbrechung (30) vorgesehenen Puffereinrichtung (31) vorübergehend gelagert werden, und wobei
die fehlgewichtigen Portionen (15) mittels eines Pufferförderers (37) der Puffereinrichtung (31) von dem ersten Förderabschnitt (27) weg transportiert werden.

11. Verfahren nach Anspruch 10,
**dadurch gekennzeichnet, dass**
zur Gewichtskorrektur wenigstens ein einzelnes Produkt (14) von der fehlgewichtigen Portion (15) entnommen oder der fehlgewichtigen Portion (15) hinzugefügt wird.

12. Verfahren nach Anspruch 10 oder 11,
**dadurch gekennzeichnet, dass**
eine erste fehlgewichtige Portion (15') als Reservoir für einzelne Produkte (14) zur Gewichtskorrektur nachfolgender fehlgewichtiger Portionen (15) verwendet wird.

## Claims

1. An apparatus for handling portions (15) of products (14), in particular food products,
having a product conveyor (11) which conveys the portions (15) after one another on at least one main conveying track (13) along a conveying direction (F);
at least one sensor for recognizing portions (15) of incorrect weight; and a correction track (25) having a first conveying section (27) which serves to branch off portions (15) of incorrect weight from the main conveying track (13) and to convey them to a weight correction station (28),
**characterized by**
a second conveying section (29) of the correction track (25) which serves to supply weight-corrected portions (15) back to the main conveying track (13), with the first conveying section (27) and the second conveying section (29) being separated from one another in the region of the weight correction station (28) by an interruption (30) of the correction track (25) which prevents a transfer of portions (15) of incorrect weight from the first conveying section (27) to the second conveying section (29), wherein
a buffer device (31) is provided in the interruption (30) for the temporary storage of portions (15) of incorrect weight; and wherein the buffer device (31) includes a buffer conveyor (37) which serves to transport portions (15) of incorrect weight away from the first conveying section (27).

2. An apparatus in accordance with claim 1,
**characterized in that**
a placement area (38) for at least one portion (15) of incorrect weight is provided in the region of the weight correction station (28) and serves as a reservoir of individual products (14) for the weight correction of following portions (15) of incorrect weight.

3. An apparatus in accordance with claim 2,
**characterized in that**
the buffer conveyor (37) or a section thereof forms a placement area (38).

4. An apparatus in accordance with at least one of the preceding claims,
**characterized in that**
at least one set of scales (33, 33') is provided in the region of the weight correction station (28) for determining the weight of portions (15) of incorrect weight and/or weight-corrected portions.

5. An apparatus in accordance with claim 4,
**characterized in that**
the set of scales (33') displays an "IO" signal when the weight of the weighed portion (15) lies within a desired range; or
displays a "+n" signal when the addition of n individual products (14) to the portion (15) is required to achieve the desired range;
or displays a "-n" signal when the removal of n individual products (14) from the portion (15) is required to achieve the desired range.

6. An apparatus in accordance with claim 4 or claim 5,
**characterized in that**
the set of scales (33') is integrated into the second conveying section (29).

7. An apparatus in accordance with any one of the claims 4 to 6,
**characterized in that**
the set of scales (33') outputs a release signal when the weight of a weight-corrected portion (15) lies in a desired range, with the release signal automatically setting the second conveying section (29) into operation.

8. An apparatus in accordance with at least one of the preceding claims,
**characterized in that**
the correction track (25) is arranged in the region of a buffer section (17) of the main conveying track (13).

9. An apparatus in accordance with at least one of the preceding claims,
**characterized in that**
a detection apparatus is arranged disposed downstream of the correction track (25) in the conveying direction (F) at the product conveyor (11) to detect the position of the conveyed portions (15), in particular of the weight-corrected portions (15), on the main conveying track (13).

10. A method of handling portions (15) of products (14), in particular food products, wherein the portions (15) are conveyed after one another on at least one main conveying track (13) along a conveying direction (F) and portions (15) of incorrect weight are recognized by means of a sensor, wherein
the recognized portions (15) of incorrect weight are branched off from the main conveying track (13) by means of a first conveying section (27) of a correction track (25) and are conveyed to a weight correction station (28),
**characterized in that**
weight-corrected portions (15) are supplied back to the main conveying track (13) on a second conveying section (29) of the correction track (25), with a transfer of portions (15) of incorrect weight from the first conveying section (27) to the second conveying section (29) being prevented by an interruption (30) of the correction track (25); wherein the portions (15) of incorrect weight are temporarily stored in a buffer device (31) provided in the interruption (30); and wherein
the portions (15) of incorrect weight are transported away from the first conveying section (27) by means of a buffer conveyor (37) of the buffer device (31).

11. A method in accordance with claim 10,
**characterized in that**
at least one individual product (14) is removed from the portion (15) of incorrect weight or is added to the portion (15) of incorrect weight for weight correction.

12. A method in accordance with claim 10 or claim 11,
**characterized in that**
a first portion (15') of incorrect weight is used as a reservoir for individual products (14) for the weight correction of following portions (15) of incorrect weight.

## Revendications

1. Appareil pour la manipulation de portions (15) de produits (14), en particulier de produits alimentaires, comprenant
un convoyeur à produits (11) qui convoie les portions (15) les unes après les autres sur au moins une voie de convoyage principale (13) le long d'une direction de convoyage (F),
au moins un capteur pour reconnaître des portions de poids erronés (15), et
une voie de correction (25) avec un premier tronçon de convoyeur (27), qui sert à dériver des portions (15) de poids erronés depuis la voie de convoyage principale (13) et à les convoyer vers une station de correction de poids (28),
**caractérisé par**
un second tronçon de convoyeur (29) de la voie de correction (25), qui sert à amener des portions (15) de poids corrigés à nouveau à la voie de convoyage principale (13), de sorte que le premier tronçon de convoyeur (27) et le second tronçon de convoyeur (29) sont séparés l'un de l'autre dans la région de la station de correction de poids (28) par une interruption (30) de la voie de correction (25), laquelle empêche un passage de portions de poids erronés (15) depuis le premier tronçon de convoyeur (27) vers le second tronçon de convoyeur (29), et
dans l'interruption (30) il est prévu un dispositif tampon (31) pour stocker provisoirement des portions de poids erronés (15), et dans lequel
le dispositif tampon (31) comprend un convoyeur tampon (37) qui sert à transporter des portions de poids erronés (15) en éloignement du premier tronçon de convoyeur (27).

2. Appareil selon la revendication 1,
**caractérisé en ce qu'**il est prévu dans la région de la station de correction de poids (28) un support (38) pour au moins une portion de poids erroné (15), qui sert de réservoir de produits individuels (14) pour la correction de poids de portions successives de poids erronés (15).

3. Appareil selon la revendication 2,
**caractérisé en ce que** le convoyeur tampon (37) ou un tronçon de celui-ci forme un support (38).

4. Appareil selon l'une au moins des revendications précédentes,
**caractérisé en ce qu'**il est prévu dans la région de la station de correction de poids (28) au moins une balance (33, 33') pour déterminer le poids de portions de poids erronés et/ou de portions (15) de poids corrigés.

5. Appareil selon la revendication 4,
**caractérisé en ce que** la balance (33')
présente un signal "en ordre" quand le poids de la portion pesée (15) est situé à l'intérieur d'une plage de consigne, ou
présente un signal "+n" lorsqu'il est nécessaire d'ajouter n produits individuels (14) à la portion (15) pour atteindre la plage de consigne, ou
présente un signal "-n" lorsqu'il est nécessaire d'enlever n produits individuels (14) à la portion (15) pour atteindre la plage de consigne.

6. Appareil selon la revendication 4 ou 5,
**caractérisé en ce que** la balance (33') est intégrée dans le second tronçon convoyeur (29).

7. Appareil selon l'une des revendications 4 à 6,
**caractérisé en ce que** la balance (33') délivre un signal de libération quand le poids d'une portion de poids corrigé (15) tombe dans une plage de consigne, et le signal de libération met automatiquement en fonctionnement le second tronçon convoyeur (29).

8. Appareil selon l'une au moins des revendications précédentes,
**caractérisé en ce que** la voie de correction (25) est agencée dans la région d'un tronçon tampon (17) de la voie de convoyage principale (13)

9. Appareil selon l'une au moins des revendications précédentes,
**caractérisé en ce qu'**un dispositif de détection est agencé sur le convoyeur à produits (11) à la suite de la voie de correction (25) en direction de convoyage (F), afin de détecter la position des portions convoyées (15), en particulier des portions de poids corrigés (15), sur la voie de convoyage principale (13).

10. Procédé pour la manipulation de portions (15) de produits (14), en particulier de produits alimentaires, dans lequel les portions (15) sont convoyées les unes après les autres sur au moins une voie de convoyage principale (13) le long d'une direction de convoyage (F) et des portions de poids erronés (15) sont reconnus au moyen d'un capteur, de sorte que les portions de poids erronés reconnues (15) sont dérivées depuis la voie de convoyage principale (13) au moyen d'un premier tronçon convoyeur (27) d'une voie de correction (25) et sont convoyés vers une station de correction de poids (28),
**caractérisé en ce que**
des portions de poids corrigés (15) sont amenées sur un second tronçon convoyeur (29) de la voie de correction (25) à nouveau à la voie de convoyage principale (13), et un passage de portions de poids erronés (15) du premier tronçon convoyeur (27) au second tronçon convoyeur (29) est empêché par une interruption (30) de la voie de correction (25), et les portions de poids erronés (15) sont stockées provisoirement dans un dispositif tampon (31) prévu dans l'interruption (30), et **en ce que**
les portions de poids erronés (15) sont transportées au moyen d'un convoyeur tampon (37) du dispositif tampon (31) en éloignement du premier tronçon convoyeur (27).

11. Procédé selon la revendication 10,
**caractérisé en ce que**, pour la correction de poids, au moins un produit individuel (14) est enlevé de la portion de poids erroné (15) ou ajouté à la portion de poids erroné (15).

12. Procédé selon la revendication 10 ou 11,
**caractérisé en ce qu'**une première portion de poids erroné (15') est utilisée comme réservoir pour des produits individuels (14) pour la correction de poids de portions (15) de poids erronés successives.
